# EUROPÄISCHE PATENTSCHRIFT

(11) **EP 1 528 358 B1**
(45) Veröffentlichungstag und Bekanntmachung des Hinweises auf die Patenterteilung: **16.03.2011**
(21) Anmeldenummer: 04024628.2
(22) Anmeldetag: 15.10.2004
(51) Int. Cl.: G01C 15/00

(54) **Optisches Bauteil und Verfahren zu dessen Herstellung**
Optical element and method for its fabrication
Elément optique et sa méthode de fabrication

(30) Priorität: 29.10.2003 CH 18462003
(43) Veröffentlichungstag der Anmeldung: 04.05.2005
(73) Patentinhaber: Leica Geosystems AG, 9435 Heerbrugg (CH)
(72) Erfinder: Bernhard, Heinz, 9442 Berneck (CH); Bürki, Marcel, 9434 Au (CH); Hinderling, Jürg, 9437 Marbach (CH)
(74) Vertreter: Kaminski, Susanne

(56) Entgegenhaltungen:
- EP-A- 0 391 671
- JP-A- 10 073 756
- US-A- 4 979 411
- US-A- 5 138 131
- US-A- 5 200 607
- US-A- 5 311 271

## Beschreibung

Die Erfindung betrifft ein optisches Bauteil mit wenigstens einem einstückigen Element aus Glas, Quarz oder anderem anorganischen optischen Material für wenigstens zwei Strahlenbündel jeweils nach dem Oberbegriff der Ansprüche 1-3, eine Vorrichtung zum Distanzmessen und ein Vermessungsinstrument nach dem Oberbegriff des Anspruch 13 sowie ein Verfahren zur Herstellung eines optischen Bauteils jeweils nach dem Oberbegriff der Ansprüche 14 und 15.

Derartige optische Bauteile sind Bestandteil vieler elektrooptischer Vorrichtungen zum Messen physikalischer Grössen oder zum Erfassen, Überwachen, Regeln oder Steuern von Prozessen. Dabei wird ein für den jeweiligen Zweck geeignetes Bündel optischer Strahlen von der Vorrichtung in dessen Umgebung ausgesendet. Die Umgebung interagiert mit dem ausgesendeten Bündel und ordnet diesem ein von der Vorrichtung detektierbares Empfangsbündel zu. Das dann detektierte Signal kann aufgrund der bekannten Art und Weise der jeweiligen Interaktion und der betreffenden Zuordnung entsprechend ausgewertet werden.

Verlässt jedoch ein Teil der Strahlen des auszusendenden Bündels die Vorrichtung nicht - beispielsweise durch brechende oder reflektierende Streuung an einem optischen Bauteil - und kann dann direkt detektiert werden, so liegt so genanntes optisches Übersprechen gestreuter Strahlen des ausgesendeten Bündel mit dem Empfangsbündel vor. Ein derart detektiertes Signal enthält neben dem eigentlichen Nutzsignal des Empfangsbündels auch ein mehr oder weniger starkes Störsignal, verursacht durch optisches Übersprechen. Dadurch kann die Funktion der Vorrichtung beeinträchtigt werden, da einerseits das Ausmass optischen Übersprechens oft nur schwer quantifizierbar ist und da andererseits - beispielsweise durch Staub oder Verschmutzung der Oberfläche des optischen Bauteils - das Ausmass zeitabhängig schwanken kann. Insbesondere bei hoch empfindlichen Sensoren oder Instrumenten mit hoher Messauflösung, wird dadurch eine gezielte Auswertung des oft schwachen Nutzsignals erheblich erschwert oder das Ergebnis der Auswertung sogar verfälscht.

Im Allgemeinen ist das Ausmass optischen Übersprechens in einer Vorrichtung umso grösser, je näher Sende- und Empfangsbündel beieinander angeordnet sind, je grösser innerhalb der Vorrichtung eine gegebenenfalls vorhandene, beiden Bündeln gemeinsame Berührungsfläche ist oder je mehr optische Bauteile von beiden Bündeln gemeinsam genutzt werden.

Bei Vorrichtungen zum Distanzmessen stellt optisches Übersprechen durchwegs ein Problem dar. Beim Durchtritt eines Sendebündels durch optisch wirksame Flächen optischer Elemente - beispielsweise durch Linsenoberflächen oder Prismenoberflächen - wird unweigerlich ein Teil der Strahlen des Sendebündels streuend gebrochen und reflektiert. Von diesen gestreuten Strahlen gelangt über das optische Bauteil selbst, über andere Bauteile und/oder über Seitenwände der Vorrichtung ein - wenn auch nur sehr geringer - Teil zum Detektor der Vorrichtung und wird dort gemeinsam mit am zu messenden Objekt reflektierten Strahlen des Empfangsbündels detektiert. Auf diese Weise kann optisches Übersprechen das Ergebnis der Distanzmessung leicht verfälschen. Dieser störende Einfluss ist in der Regel umso grösser je schwächer die am Objekt reflektierten Strahlen des Empfangsbündels sind. Dies ist insbesondere bei Messungen auf Zielobjekte in grossen Entfernungen oder mit einer natürlich rauen, streuend reflektierenden Oberfläche der Fall.

Durch ein optisch mehr oder weniger abgeschirmtes, separates optisches System für das Sendebündel kann optisches Übersprechen in an sich bekannter Weise unterdrückt werden. Da sich bei biaxialen Entfernungsmessern - mit intern nebeneinander angeordnetem Sende- und Empfangsbündel - relativ leicht ein solches separates optisches System realisieren lässt sich, wird von dieser Massnahme immer wieder Gebrauch gemacht. Durch die jeweils notwendige Ausdehnung der Sende- und Empfangsoptik wird jedoch ein bestimmter Abstand zwischen den Wirkachsen des Sende- und dem Empfangsbündel vorgegeben. In Abhängigkeit der Anwendung, beispielsweise beim koinzidierenden Anmessen eines nahen Eckwürfelprismas, darf dieser Abstand einen vorgegebenen, geringen Wert nicht überschreiten, wodurch für viele Anwendungen ein getrenntes Anordnen der Optiken nebeneinander praktisch nicht in Frage kommt.

Um den Abstand zwischen Sende- und Empfangsbündeln zu reduzieren sind zusammengesetzte Sende- und Empfangsobjektive bekannt, wobei im Randbereich des Empfangsobjektivs eine Ausfräsung für den Randbereich des Sendeobjektivs vorgesehen ist. Vor dem Zusammensetzen der beiden Objektivteile werden die aneinandergrenzenden Randbereiche der beiden Objektivteile mit einer optischen Sperrschicht versehen. Ein derartiges zusammengesetztes Objektiv erfordert teure optische Einzelelemente mit einer nicht standardisierten Linsenform und eine aufwändige Fassung des zusammengesetzten Sende- und Empfangsobjektivs, das dennoch einen, wenn auch geringeren, Abstand der Wirkachsen des Sende- und Empfangsbündels aufweist, der bestimmte Anwendungen ausschliessen kann.

Im Vermessungswesen haben sich heute Theodolite mit integriertem Distanzmesser durchgesetzt, dessen Sende- und Empfangsbündel koaxial zur Zielachse des Fernrohrs des Theodoliten ausgerichtet sind, wodurch in der Regel das Objektiv des Fernrohrs vom Sende- und Empfangsbündel gemeinsam genutzt wird. Insbesondere durch das gemeinsam genutzte Objektiv tritt optisches Übersprechen in bedeutenden Umfang auf, gegen das Massnahmen getroffen werden müssen, welche oft mit erheblichem Aufwand verbunden sind.

Aus der DE 27 45 565 C2 ist ein derartiger Theodolit mit integriertem, koaxialem Distanzmesser bekannt, dessen Objektiv eine Vielzahl von optischen und mechanischen Elementen aufweist, um optisches Übersprechen am Objektiv gestreuter Strahlen des Sendebündels zu vermeiden. Ein solches Objektiv ist mit einem beträchtlichen Aufwand bei der Konstruktion, Herstellung, Montage und Justierung einer solchen Vorrichtung verbunden. Je mehr separate Teile eine Optik aufweist, umso geringer ist im Allgemeinen zudem auch die Lagestabilität und Justierhaltigkeit der Teile zueinander, was insbesondere bei Präzisionsgeräten ein Problem darstellen kann.

Aus diesem Grund weisen heute Theodoliten mit integriertem, koaxialem Distanzmesser - wie aus der DE 196 15 601 A1 bekannt - oft nur ein Kittglied aus zwei oder mehreren rundoptischen Elementen auf. Optisches Übersprechen am Kittglied gestreuter Strahlen des Sendebündels bringt eine Reduktion der Reichweite mit sich, die jedoch zugunsten der Einfachheit der Konstruktion des Objektivs heute in Kauf genommen werden muss.

EP 0 3981 671 A2 offenbart ein einstückiges optisches Bauteil über welches zugleich Strahlenbündel empfangen und ausgesandt werden können. Das optische Bauteil aus der EP'671 weist eine konvexe Linse auf, die über einem Phototransistor angeordnet ist. Weiter weist das Bauteil eine konkave Linse auf, die über einem LED angeordnet ist. Ein Oberflächenabschnitt erstreckt sich als optische Trenneinrichtung in den Körper des Bauteils hinein. Mit dieser Trenneinrichtung wird ein optisches Übersprechen verhindert (z.B. wenn das auszusendende Bündel am optischen Bauteil selbst reflektiert wird).

Sind in einer Vorrichtung, beispielsweise in einem Theodoliten mit zwei Distanzmessern und einer automatischen Zielerfassung, mehrere unterschiedliche Sendebündel und mehrere Empfangsbündel vorgesehen, so können mit optischem Übersprechen zusammenhängende Probleme zusätzlich verschärft werden.

Auch bei einem optischen Bauelement in einer Vorrichtung zum optischen Abbilden eines Objekts über ein Bündel abzubildender Strahlen können vom Bauteil verursachte Streustrahlen eines Störstrahlenbündels - wie zum Beispiel Sonnenstrahlen - das schräg zum Abbildungsbündel einfällt, Probleme hervorrufen. Bei Zielfernrohren von Vermessungsgeräten mit grossen Abbildungsverhältnissen ist beispielsweise die Helligkeit des Abbildungsbündels in der Regel gering, wodurch Streustrahlen, welche durch schräg einfallende Sonnenstrahlen hervorgerufen werden, zu einem milchigen, kontrastschwachen Bild führen. Aber auch beim Abbilden lichtschwacher Objekte reduzieren Streustrahlen schräg einfallender Strahlenbündel von Fremdlicht den Kontrast der Abbildung erheblich.

Zum Unterdrücken von Streustrahlen, die an einem optischen Bauteil durch ein schräg einfallendes Störstrahlenbündel erzeugt werden, sind unterschiedliche Massnahmen bekannt. So ist zum Beispiel ein Einbringen einer lamellenartigen Metallstruktur in Glas beim Einschmelzen oder Strangpressen vorgeschlagen worden. Die Herstellung von optischen Linsen aus einem solchen Glas ist jedoch nach wie vor nicht beherrscht. Weiters sind ionendotierte Spezialgläser bekannt, in die durch UV-Bestrahlung lamellenartige schwarze Trennschichten gezielt einbringbar sind. Solche Spezialgläser sind jedoch sehr teuer und stehen nicht in allen für Objektive gebräuchliche Glastypen - beispielsweise Kron oder Flint - zur Verfügung.

Es ist Aufgabe der Erfindung Mängel des Standes der Technik zu beheben und ein optisches Bauteil mit mehreren Segmenten, die mehreren Strahlenbündeln zugeordnet sind, bereitzustellen, welches Bauteil nur sehr geringes optisches Übersprechen hervorruft und eine hohe Formstabilität aufweist.

Diese Aufgabe wird durch ein optisches Bauelement und ein Verfahren mit den Merkmalen des Patentanspruchs 1-3, 14 und 15gelöst. Weitere alternative oder vorteilhafte Aus- bzw. Weiterbildungen der Erfindung sind in den Merkmalen der abhängigen Patentansprüche beschrieben.

Ein optisches Bauteil für wenigstens zwei Strahlenbündel weist wenigstens ein einstückiges Element aus Glas, Quarz oder anderem anorganischen optischen Material und wenigstens zwei den Strahlenbündeln zugeordnete Segmente auf, von denen das erste Segment von dem wenigstens einen zweiten Segment im Wesentlichen umgeben ist. Gemäss der Erfindung ist zwischen dem ersten und dem wenigstens zweiten Segment eine Einsenkung vorgesehen. Diese ist derart ausgebildet, dass das erste Segment im Wesentlichen vom wenigstens einen zweiten Segment optisch abgeschirmt ist und über wenigstens eine Materialbrücke vom zweiten Segment lagestabil zu diesem gehalten wird.

Eine Ausführungsart eines erfindungsgemässen optisches Bauteil weist wenigstens ein optisches Element aus Glas, Quarz oder anderem anorganischen optischen Material für eine Vorrichtung zum Aussenden eines ersten Strahlenbündels und zum Empfangen wenigstens eines zweiten Strahlenbündels auf. Dabei ist ein erstes Segment für das Durchqueren des ersten und gegebenenfalls des wenigstens einen zweiten Strahlenbündels und wenigstens ein zweites Segment für das Durchqueren des wenigstens einen zweiten Strahlenbündels vorgesehen. Zwischen dem ersten und dem wenigstens einen zweiten Segment ist wenigstens eine Einsenkung vorgesehen, die derart ausgebildet ist, dass innerhalb der Vorrichtung ein optisches Übersprechen von am optischen Bauteil gestreuten Strahlen des ersten Strahlenbündels mit dem wenigstens einen zweiten Strahlenbündel mittel- oder unmittelbar im Wesentlichen verhindert wird. Gemäss der Erfindung umgibt dabei das wenigstens eine zweite Segment im Wesentlichen das erste Segment.

Im Sinne der Erfindung ist unter einer Einsenkung in ein optisches Bauteil eine Ausnehmung von beliebiger dreidimensionaler Form im Bauteil zu verstehen. Die Einsenkung gemäss der Erfindung kann - vergleichbar einem Sackloch - nicht durch das Bauteil hindurchgehen, teilweise durch das Bauteil hindurchgehen oder - vergleichbar einem Durchgangsloch - mit dem ganzen Querschnitt der Einsenkung durch das Bauteil hindurch gehen.

Eine Ausbildung der Erfindung sieht eine nicht durchgehende Einsenkung zwischen einem ersten und wenigstens einem zweitem Segment des Bauteils derart vor, dass sich eine Materialbrücke zwischen dem Boden der Einsenkung und einer optischen Fläche des Bauteils bestehen bleibt. Über diese Materialbrücke wird das erste Segment relativ zum zweiten Segment lagestabil gehalten. Das Bauteil bildet eine geschlossen dichte Einheit.

Eine alternative Ausbildung der Erfindung sieht eine durchgehende Einsenkung zwischen einem ersten und wenigstens einem zweitem Segment des Bauteils derart vor, dass in der Regel mehrere Materialbrücken im Wesentlichen in Ausbreitungsrichtung der Strahlenbündel zwischen den Segmenten des Bauteils wenigstens teilweise erstrecken. Über diese Materialbrücken wird das erste Segment relativ zum zweiten Segment lagestabil gehalten. Im Allgemeinen kann ein solches Bauteil über ein in die Einsenkung eingefügtes, in der Regel nicht transparentes Füllmaterial abgedichtet werden.

Für ein Einbringen von im Wesentlichen spaltförmigen Einsenkungen in ein optisches Bauteil hat sich insbesondere das Ultraschall-Schwingläppen als geeignet erwiesen. Die optischen Elemente des Bauteils, die aus Glas, Quarz oder anderem anorganischem optischen Material bestehen, begünstigen durch deren spröde Materialeigenschaften ein Abtragen mittels Ultraschall-Schwingläppens. Mit diesem Verfahren lassen sich Einsenkungen von grosser Formenvielfalt, insbesondere von nichtrotationssymmetrischem Formen, auch in bereits polierte, gegebenenfalls beschichtete und gefasste optische Bauteile praktisch ohne bleibende Verspannungen in diese kostengünstig einbringen. Auch treten keine Abplatzungen oder Ausmuschelungen optischer Flächen auf, durch die durchgehende Einsenkungen austreten.

Zwar sind aus der Zeitschrift "Mechatronik F&M 104 (1996) 1-2; Carl Hanser Verlag München" Ultraschall-schwingläppende Bearbeitungsverfahren bereits für die Glasbearbeitung bekannt, jedoch sollen sich diese aufgrund der erzielbaren Genauigkeiten und der geringen Abtragsleistungen als Endbearbeitungsverfahren in der Glasbearbeitung nicht etabliert und den Laborbereich nicht verlassen haben.

Ebenso ist es denkbar spaltförmgige Einsenkungen mit Hilfe eines Leistungslasers, dessen Wellenlänge wenigstens teilweise vom optischen Material absorbiert wird, in ein optisches Bauteil einzubringen.

Nachstehend wird die Erfindung anhand der Figuren rein beispielhaft näher erläutert. Gleiche Teile in unterschiedlichen Ausführungsbeispielen, welche dieselben Funktionen ausüben, sind nachstehend mit gleichen Bezeichnungen und Bezugszeichen versehen. Es zeigen in schematischer Darstellung:
- Figur 1: ein erstes Ausführungsbeispiel des erfindungsgemässen optischen Bauteils als Objektiv in einem Vermessungsinstrument im Längsschnitt;
- Figur 2: das Ausführungsbeispiel aus Figur 1 im Querschnitt;
- Figur 3: ein zweites Ausführungsbeispiel des erfindungsgemässen Bauteils als Objektiv für ein Vermessungsinstrument gemäss Figur 1 im Längsschnitt;
- Figur 4: das Ausführungsbeispiel aus Figur 3 im Querschnitt;

- Figur 5: ein drittes Ausführungsbeispiel des erfindungsgemässen Bauteils als Objektiv für ein Vermessungsinstrument gemäss Figur 1 im Querschnitt;
- Figur 6: ein viertes Ausführungsbeispiel des erfindungsgemässen Bauteils als Objektiv für ein Vermessungsinstrument gemäss Figur 1 im Querschnitt;
- Figur 7: ein fünftes Ausführungsbeispiel des erfindungsgemässen Bauteils als Objektiv für ein Vermessungsinstrument gemäss Figur 1 im Längsschnitt;
- Figur 8: ein sechstes Ausführungsbeispiel des erfindungsgemässen Bauteils als Objektiv für ein weiteres Vermessungsinstrument in Seitenansicht;
- Figur 9: ein siebtes Ausführungsbeispiel des erfindungsgemässen Bauteils als Objektiv für eine Vorrichtung zur optischen Aufnahme eines Objekts im Querschnitt;
- Figur 10: ein achtes Ausführungsbeispiel des erfindungsgemässen Bauteils als Strahlteiler für eine Vorrichtung im Querschnitt;
- Figur 11: ein neuntes Ausführungsbeispiel als Objektiv für eine ein weiteres Vermessungsinstrument im Längsschnitt und

- Figur 12: ein zehntes Ausführungsbeispiel als Objektiv für eine Vorrichtung zum Abbilden im Längsschnitt.

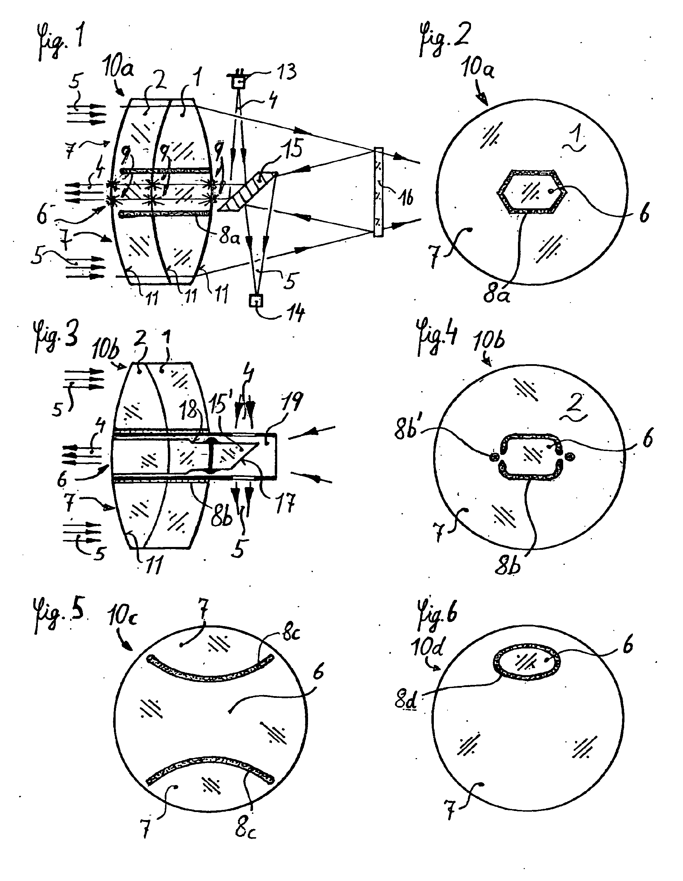

Figur 1 zeigt ein Fernrohr eines Theodoliten im Längsschnitt. Im Fernrohr ist eine Vorrichtung zum Distanzmessen integriert, deren Sende- und Empfangsbündel koaxial zur Ziellinie des Fernrohrs und ausgerichtet sind. Ein erstes Ausführungsbeispiel eines erfindungsgemässen optischen Bauteils ist als gemeinsames Objektiv 10a für das Sehstrahlenbündel des Fernrohrs, das Sende- und das Empfangsbündel der Vorrichtung zum Distanzmessen ausgebildet.

Das Fernrohr mit einer solchen Vorrichtung weist in an sich bekannter Weise weiters einen Sender 13, einen Empfänger 14, ein zentrales Reflexionselement 15, ein wellenlängenselektives Reflexionselement 16 und ein Okular auf. Ein als Sendebündel ausgebildetes, hier beispielsweise durch eine Laserdiode erzeugtes erstes Strahlenbündel 4 mit einem sechseckigen Querschnitt wird vom Sender 13 über das zentrale Reflexionselement 15 gegen ein in Figur 1 nicht dargestelltes Zielobjekt ausgesendet. Über ein in Figur 1 nicht dargestelltes Halteelement ist hier das zentrale Reflexionselement 15 auf der optischen Achse des Objektivs 10a positioniert. Vom Zielobjekt wird aufgrund optischer Reflexion ein als Empfangsbündel ausgebildetes zweites Strahlenbündel 5 dem ersten Strahlenbündel 4 zugeordnet. Das zweite Strahlenbündel 5 wird über das wellenlängenselektive Reflexionselement 16 und das zentrale Reflexionselement 15 zum Empfänger 14 geleitet und dort detektiert.

Das als Objektiv 10a ausgebildete erfindungsgemässe optische Bauteil ist hier ein Kittglied aus einem ersten und einem zweiten optischen Element 1 bzw. 2, die ihrerseits als sphärische Linsen mit jeweils zwei polierten und beschichteten optischen Flächen 11 ausgebildet sind. Die beiden optischen Elemente 1 und 2 sind hier aus einem Stück optischem Glas gefertigt. Es wäre aber auch denkbar ein solches optisches Element aus Quarz oder einem anderen anorganischem optischen Material zu fertigen. Das optische Bauteil weist ein erstes Segment 6 und ein dieses umgebendes zweites Segment 7 auf, welche jeweils vom ersten Strahlenbündel 4 bzw. vom zweiten Strahlenbündel 5 durchquert werden. Eine spaltförmige Einsenkung 8a ist hier über ein im Ultraschallbereich schwingendes, formgebendes Läppwerkzeug zwischen dem ersten und zweiten Segment 6 bzw. 7 in das bereits zusammen gekittete optische Bauteil durch das erste Element 1 hindurch und in das zweite Element 2 hinein eingebracht worden. Die spaltförmige Einsenkung durchstösst drei der vier optische Flächen 11 und erstreckt sich hier bis in die Nähe der objektseitigen optischen Fläche 11, so dass das verbleibende Material des einstückigen, optischen Elements 2 das erste Segment 6 des optischen Bauteils sicher hält, wodurch die mechanische Stabilität und geometrische Formhaltigkeit des optischen Bauteils dennoch im Wesentlichen unverändert erhalten bleibt. Durch das verbleibende Material liegt zudem trotz der spaltförmigen Einsenkung ein geschlossen dichtes Bauteil vor.

Die Tiefenausdehnung des Spalts der - in Figur 1 und 2 nur schematisch dargestellten - spaltförmigen Einsenkung 8a erstreckt sich im Wesentlichen parallel zur Ausbreitungsrichtung des erstens Strahlenbündels 4 und kann beispielsweise einen Wert von sieben Millimetern aufweisen. Das optische Bauteil weist im zwischen der optischen Fläche 11 und dem Boden der spaltförmigen Einsenkung 8a eine verbleibende Materialstärke von beispielsweise einem Millimeter auf. Die Breite des Spalts, hier durch zwei im Wesentlichen parallel zueinander verlaufende Wände gegeben, weist einen Wert von beispielsweise einem halben Millimeter auf.

Die Einsenkung 8a weist als Folge dessen Ultraschallschwingläppender Einbringung eine optisch raue Oberfläche auf, die hier beispielsweise mit einer schwarzen Lackierung versehen ist und im hohen Masse optische Strahlen absorbiert. Die Einsenkung 8a könnte aber auch beispielsweise mit Tinte geschwärzt oder mit einem für die entsprechenden Strahlen undurchlässigen Füllstoff, beispielsweise Teer oder nicht-transparentem Klebstoff, ausgefüllt sein. Auf diese Weise können in Abhängigkeit der Ausbildung der Einsenkung Blockungswerte von bis zu 100 optischen Dezibel und mehr erzielt werden.

Wenn das erste Strahlenbündel 4 das erste Segment 6 durchquert, werden zwangsläufig an jeder der vier optischen Flächen 11 brechend oder reflektierend gestreute Strahlen 9 erzeugt. Der grösste Teil dieser gestreuten Strahlen 9 wird direkt nach deren Erzeugung über die beispielsweise schwarz lackierte, optisch raue Oberfläche der Einsenkung 8a absorbiert, die hier entlang des grössten Teils des ersten Segments 6 um dieses durchgehend herum in das Objektiv 10a eingebracht ist. Da die absorbierten gestreuten Strahlen 9 nicht mehr über Reflexionen innerhalb des Fernrohrs zum Empfänger 14 gelangen können, wird dadurch der grösste Teil des unerwünschten optischen Übersprechens verhindert.

Je länglicher dabei die Einsenkung 8a ausgebildet ist und je näher die Einsenkung 8a an die objektseitige optische Fläche 11 eingebracht ist, umso mehr gestreute Strahlen 9 können von der Einsenkung 8a absorbiert werden. Eine eng am ersten Strahlenbündel 4 anliegende Einsenkung 8a begünstigt dabei das Längen-Breiten-Verhältnis der Einsenkung. Da beim Einbringen der Einsenkung 8a mittels Ultraschall-Schwingläppens, im Vergleich zu konventionellem Bohren oder Fräsen mit Diamantwerkzeugen, geringe Bearbeitungskräfte auftreten, kann einerseits das formgebende Läppwerkzeug dünnwandig und trotzdem länglich ausgebildet und andererseits die im Bereich der Einsenkung 8a verbleibende Materialstärke des Bauteils sehr gering gewählt werden. Die Dimensionierung der verbleibenden Materialstärke wird hierbei in der Regel durch die geforderte mechanische Stabilität des optischen Bauteils vorgegeben.

In an sich bekannter Weise werden am Zielobjekt reflektierte Strahlen des ersten Strahlenbündels 4 durch das zentrale Reflexionselement 15 zum Teil am Vordringen zum Empfänger 14 gehindert. Dies kann bei Messungen auf nahe Zielobjekte zu Empfangsproblemen führen. Da hier ein weiterer Teil der am Zielobjekt reflektierten Strahlen auch noch durch die Einsenkung 8a absorbiert werden, werden diese Probleme zusätzlich verschärft. Je breiter der Spalt der Einsenkung 8a ausgebildet ist, umso mehr verschärft sich das Problem zusätzlich. Die im Vergleich zu konventionellem Fräsen mittels Ultraschall-Schwingläppen erzielbare, sehr geringe Ausdehnung der Breite des Spalts kann somit sowohl in Bezug auf die Stabilität des optischen Bauteils als auch in Bezug auf das Messen auf nahe Zielobjekte vorteilhaft genutzt werden.

Durch die geringen Bearbeitungskräfte des Ultraschall-Schwingläppens treten praktisch auch keine nennenswerten mechanischen Beanspruchungen des Bauteils bei dessen Bearbeitung auf. Dadurch können auch bleibende Verspannungen im optischen Bauteil und eine damit verbundene Verschlechterung der optischen Abbildungsqualität der die Einsenkung umgebenden Bereiche vermieden werden. Zudem kommt es beim Eintritt des formgebenden Werkzeugs in das Bauteil praktisch zu keinen Materialabsplitterungen. Deshalb kann die Einsenkung 8a sogar in bereits verkittete und gegebenenfalls bereits mechanisch gefasste optische Bauteile eingebracht werden. Die Vorteile für die Flexibilität des Fertigungsprozesses des optischen Bauteils liegen auf der Hand.

Figur 2 zeigt das erste Ausführungsbeispiel eines erfindungsgemässen optischen Bauteils im Querschnitt, das als Objektiv 10a für das Fernrohr aus Figur 1 ausgebildet ist. Die Schnittebene verläuft durch das Zentrum des optischen Elements 1 aus Figur 1. In diesem Ausführungsbeispiel liegt das erste Segment 6 zentrisch innerhalb des zweiten Segments 7 und wird von der spaltförmigen Einsenkung 8a zusammenhängend umlaufend umgreifen.

Je enger die Einsenkung 8a am ersten Strahlenbündel 4 aus Figur 1 anliegt, umso mehr gestreute Strahlen des ersten Strahlenbündels 4 werden von der Einsenkung 8a absorbiert. Hat das ausgesendete erste Strahlenbündel 4, wie im ersten Ausführungsbeispiel, einen sechseckigen Querschnitt, so weist der Querschnitt der Einsenkung 8a hier mit Vorteil eine entsprechende linienförmige Sechseckform auf. Da die Einsenkung 8a weder für das Aussenden des ersten Strahlenbündels 4 noch für das Empfangen des zweiten Strahlenbündels 5 aus Figur 1 zur Verfügung steht, ist der nutzbare Anteil der Durchtrittsfläche des erfindungsgemässen, optischen Bauteils umso grösser, je kleiner der Querschnittfläche des Spalts der Einsenkung 8a gewählt werden kann. Daher sind die durch Ultraschall-Schwingläppen erzielbaren, sehr geringen Werte der Breite des Spalts auch in Bezug auf eine optimale Ausnutzung der Durchtrittsfläche eines optischen Bauteils von Vorteil.

Figur 3 zeigt ein zweites Ausführungsbeispiel eines erfindungsgemässen optischen Bauteils, das alternativ zum Objektiv 10a aus Figur 1 als weiteres Objektiv 10b mit integriertem Spiegelprisma 15' für das Fernrohr des Theodoliten ausgebildet ist. Das weitere Objektiv 10b ist als Kittglied zweier optischen Element 1 und 2 ausgebildet, wobei das Spiegelprisma 15' - im Gegensatz zum zentralen Reflexionselement 15 aus Figur 1 - mit dem ersten optischen Element 1 verkittet ist. Das Spiegelprisma 15' weist eine zweiseitige Reflexionsfläche 17 auf, an der einerseits das erste und andererseits das zweite Strahlenbündel 4 bzw. 5 aus Figur 1 reflektiert wird.

Vor dem Verkitten mit dem Spiegelprismas 15' werden im Gegensatz zur Einsenkung 8a aus Figur 1 zwei durch die beiden optischen Elemente 1 und 2 hindurch gehende, abgestufte Einsenkungen 8b über ein im Ultraschallbereich schwingendes, mit einer Stufe versehenes Läppwerkzeug in das weitere Objektiv 10b eingebracht. Sie weisen im Befestigungsbereich für das Spiegelprisma 15' eine Stufe 18 auf. Die Stufe 18 wirkt dabei als Klebstoffpuffer für den zum Verkitten des Spiegelprismas 15' notwendigen Klebstoff. Ein Entfernen und Reinigen von überschüssigem Klebstoff, kann dadurch entfallen, wodurch der Herstellprozess für das weitere Objektiv 10b vereinfacht wird. Anstatt der Stufenform könnte der Spalt der Einsenkungen 8b beispielsweise auch eine Keilform aufweisen.

An der objektseitigen optischen Fläche 11 gestreut reflektierte Strahlen können hier in noch grösserem Ausmass absorbiert werden, das die abgestuften Einsenkungen 8b alle vier optische Flächen 11 der optischen Elemente 1 und 2 durchstossen.

Durch die Verkittung des Spiegelprismas 15' mit dem ersten optisches Element 1 des weiteren Objektiv 10b kann ein quasimonolithisches optisches Bauteil realisiert werden, welches aufgrund der im Allgemeinen hohen Steifigkeit und dem geringen Wärmeausdehnungskoeffizient von anorganischem optischen Material eine Formstabilität aufweist, die in etwa mit einem monolithischen Element aus einem solchen Material vergleichbar ist. Die einzelnen optischen Elemente und die jeweiligen Segmente eines solchen Bauteils zeichnen sich insbesondere durch eine hohe Lagestabilität - also einer hohen Positions- und Ausrichtungsstabilität - relativ zueinander aus. Zugleich wird durch die abgestuften Einsenkungen 8b eine weitestgehende optische Abdichtung des ersten Segments 6 gegen das zweite Segment 7 und optisches Übersprechen am optischen Bauteil gestreuter Strahlen des ersten Strahlenbündels 4 mit dem zweiten Strahlenbündel 5 am Empfänger 14 aus Figur 1 weitestgehend verhindert werden.

Im Gegensatz zum ersten Ausführungsbeispiel ist hier zum mittelbaren Verhindern optischen Übersprechens ein dünnwandiges schwarzes Kunststoffteil 19 in die Einsenkung eingefügt. Es umgreift hier zusätzlich mit Ausnahme einer Eintritts- und einer Austrittsöffnung für das erste bzw. zweite Strahlenbündel 4 bzw. 5 auch das Spiegelprisma 15', um zusätzlich optisches Übersprechen zu unterbinden.

Für ein für einen anderen Zweck vorgesehenes optisches Bauteil wäre es nach dem Einbringen einer entsprechenden Einsenkung genauso gut möglich, anstatt eines Spiegelprismas 15' ein anderes optisches Element, beispielsweise eine kleine, runde Linse mit diesem zu verkitten.

Figur 4 zeigt das zweite Ausführungsbeispiel des erfindungsgemässen optischen Bauteils aus Figur 3 im Querschnitt, wobei das eingefügte Kunststoffteil 19 im Gegensatz zu Figur 3 nicht dargestellt ist. Die Schnittebene verläuft durch das Zentrum des zweiten optischen Elements 2 aus Figur 3. Das erste Segment 6 liegt auch hier konzentrisch innerhalb des zweiten Segments 7. Im Gegensatz zur ersten umgreifen bei der zweiten Ausführungsform die korbförmigen, abgestuften Einsenkungen 8b mit Ausnahme zweier Unterbrechungen das erste Segment 6. Jede der beiden Unterbrechungen dient als stegartige Materialbrücke zwischen dem ersten und dem zweiten Segment 6 bzw. 7. Durch die Materialbrücken wird das erste Segment 6 sicher und lagestabil relativ zum zweiten Segment 7 gehalten.

Mit Vorteil kann in der Umgebung der Materialbrücken jeweils eine dünne, bohrungsförmige Einsenkung 8b' in das weitere Objektiv 10b eingebracht werden, um eine direkte Ausbreitung am ersten Segment 6 gestreuter Strahlen des ersten Strahlenbündels über die beiden Materialbrücken zu verhindern. Die bohrungsförmigen Einsenkungen 8b' können beispielsweise zusammen mit den abgestuften Einsenkungen 8b über dasselbe Läppwerkzeug in das Bauteil eingebracht werden. Es wäre aber auch denkbar, die beiden bohrungsförmigen Einsenkungen 8b' über ein zweites formgebendes Läppwerkzeug durch die objektseitige optische Fläche 11 aus Figur 3 in das Objektiv 10b in entgegengesetzter Richtung zu den stufenförmigen Einsenkungen 8b in das Bauteil einzubringen.

Natürlich könnten solche stegartigen Materialbrücken auch bei einer - wie in Figur 1 - nicht durch das optische Bauteil hindurch gehenden Einsenkung vorgesehen sein. Dadurch wird die Stabilität eines derartigen Bauteils noch weiter erhöht, so dass das erste Segment 6 trotz des daran befestigten Spiegelprismas auch extremen Vibrations- und Schockbelastungen sicher und lagestabil standhält.

Figur 5 zeigt ein drittes Ausführungsbeispiel des erfindungsgemässen Bauteils im Querschnitt, das als weiteres Objektiv 10c für ein Fernrohr mit integrierter Vorrichtung zum Distanzmessen ausgebildet ist. Im Gegensatz zur Vorrichtung aus Figur 1 wird jedoch das erste Strahlenbündel von einer LED erzeugt und weist beim Durchtritt durch das weitere Objektiv 10c einen grösseren Querschnitt des Strahlenbündels auf. Das weitere Objektiv 10c weist ein erstes Segment 6 mit einem - im Vergleich zum Objektiv 10a aus Figur 2 - entsprechend grösseren Querschnitt auf. Für zwei zweite Strahlenbündel, die am Zielobjekt reflektierte Strahlen enthalten, sind hier zwei zweite Segmente 7 vorgesehen, die beidseits des ersten Segment 6 dieses umgebend angeordnet sind. Zwei kreisbogenförmige Einsenkungen 8c verhindern innerhalb der Vorrichtung optisches Übersprechen am ersten Segment 6 gestreuter Strahlen des ersten Strahlenbündels mit den Strahlen der beiden zweiten Strahlenbündeln.

Es wäre auch denkbar, jedem der beiden zweiten Strahlenbündel, nicht nur jeweils ein zweites Segment 7, sondern auch jeweils einen separate Empfänger zuzuordnen.

Auch könnten die beiden zweiten Strahlenbündel, gegebenenfalls sogar von zwei Lichtquellen erzeugte, Sendestrahlen und das erste Strahlenbündel die am Zielobjekt reflektierten Strahlen enthalten. Dabei würde von den beiden kreisbogenförmigen Einsenkungen 8c innerhalb der Vorrichtung optisches Übersprechen an den zweiten Segmenten 7 gestreuter Strahlen der beiden zweiten Strahlenbündel mit den Strahlen des ersten Strahlenbündels verhindert.

Figur 6 zeigt ein viertes Ausführungsbeispiel des erfindungsgemässen Bauteils im Querschnitt, das als weiteres Objektiv 10d für ein Fernrohr mit integrierter Vorrichtung zum Distanzmessen ausgebildet ist. Im Gegensatz zur Vorrichtung aus Figur 1 ist jedoch das erste Strahlenbündel exzentrisch zum zweiten Strahlenbündel angeordnet.

Das erste Segment 6 ist entsprechend exzentrisch innerhalb des zweiten Segments 7 angeordnet und weist hier einen länglich elliptischen Querschnitt auf, der dem Querschnitt des hier von einer Laserdiode erzeugten ersten Strahlenbündels entsprechend angepasst ist. Die spaltförmige, exzentrisch angeordnete Einsenkung 8d umgreift hier zusammenhängend umlaufend das erste Segment 6.

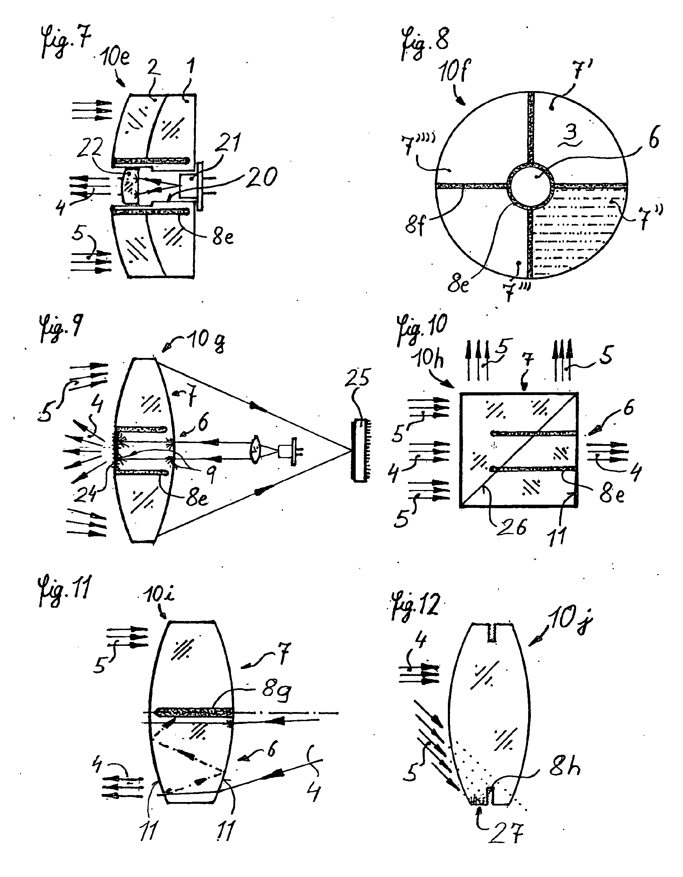

Figur 7 zeigt ein fünftes Ausführungsbeispiel des erfindungsgemässen Bauteils im Längsschnitt, das als weiteres Objektiv 10e für ein Fernrohr mit integrierter Vorrichtung zum Distanzmessen ausgebildet ist. Im Gegensatz zur Vorrichtung aus Figur 1 wird hier das erste Strahlenbündel 4 nicht über ein zentrales Reflexionselement auf das nicht dargestellte Zielobjekt gerichtet.

Das Objektiv 10e ist als Kittglied zweier optischer Elemente 1 und 2 ausgebildet und weist zusätzlich zu einer hier zylindrische Einsenkung 8e eine durchgehende zentrale Ausnehmung 20 auf. Die zentrale Ausnehmung 20 kann zusammen mit der zylindrischen Einsenkung 8e in einem Bearbeitungsschritt über ein gemeinsames Läppwerkzeug in das Bauteil eingebracht werden. In die zentrale Ausnehmung 20 ist hier einenends eine das erste Strahlenbündel 4 erzeugende Laserdiode 21 und anderenends eine Kollimatorlinse 22 direkt eingefügt.

Durch das direkte Zusammenfügen der Laserdiode 21 mit dem Kittglied des Objektivs 10e wird ein elektrooptisches System geschaffen, welches eine aussergewöhnliche hohe Stabilität der Ausrichtung des ersten Strahlenbündels 4 zum Kittglied aufweist.

Durch die eingefügte Kollimatorlinse 22 wird es möglich eine komplette Sendeoptikeinheit im Zentralbereich des Objektivs 10e unterzubringen, die zudem über die zylindrische Einsenkung 8e von den anderen Teilen der Vorrichtung eigentlich optisch abgeschirmt ist. Optisches Übersprechen an der Kollimatorlinse 22 gestreuter Strahlen des ersten Strahlenbündels 4 mit dem zweiten Strahlenbündel 5 am nur in Figur 1 dargestellten Empfänger kann dadurch praktisch vollständig verhindert werden.

Figur 8 zeigt ein sechstes Ausführungsbeispiel des erfindungsgemässen Bauteils in Seitenansicht. Es ist als quasimonolithisches Abschlusselement 10f für eine multifunktionale Vorrichtung zum beispielsweise automatischen Erfassen, Vermessen und Dokumentieren von Zielobjekten über drei erste und vier zweite Strahlenbündel ausgebildet.

Das quasimonolithische Abschlusselement 10f weist hier ein als konvexe Trägerlinse 3 ausgebildetes drittes optisches Element aus Glas mit einem zentralen ersten und vier peripheren zweiten Segmenten 6, bzw. 7' bis 7"" auf. Dabei sind hier dem ersten Segment 6 die drei ersten Strahlenbündel und den vier zweiten Segmenten 7' bis 7"" jeweils eines der vier zweiten Strahlenbündel zugeordnet. Jedes der vier zweiten Segmente 7' bis 7"" weist jeweils eine unterschiedliche Brennweite auf und ist für jeweils einen unterschiedlichen Zweck vorgesehen. Zwischen dem ersten Segment 6 und den zweiten Segmenten 7' bis 7"" ist zur Vermeidung optischen Übersprechens innerhalb der Vorrichtung eine zylindrische Einsenkung 8e im Abschlusselement 10f vorgesehen. Wie hier gezeigt können zusätzlich auch die vier zweiten Segmente 7' bis 7"" jeweils über eine radiale Einsenkung 8f' gegeneinander zusätzlich optisch abgeschirmt werden.

Das erste Segment 6 umfasst hier den Zentralbereich der Trägerlinse 3 und beispielsweise eine mit diesem verkittete plankonkave Linse aus Glas. Das erste zweite Segment 7' wird vom einem peripheren Viertelsegment der Trägerlinse 3 als solches gebildet. Das zweite zweite Segment 7" wird von einem weiteren Viertelsegment der Trägerlinse 3 mit einem applizierten Dünnschichtfilm aus Solgel oder Kunstststoff gebildet, in den mittels Prägetechnik Strukturen eingebracht sind, die beispielsweise asphärische Korrekturen ermöglichen. Das dritte zweite Segment 7"' wird von einem peripheren Viertelsegment einer diffraktiven Linse bestimmt. Das vierte zweite Segment 7"" wird von einem peripheren Viertelsegment einer konvex-konkaven Linse bestimmt.

Figur 9 zeigt eine Vorrichtung zur optischen Aufnahme mit einer Beleuchtungseinrichtung im Längsschnitt, die einen bildgebenden Detektor 25, eine Lichtquelle und ein siebtes Ausführungsbeispiel des erfindungsgemässen Bauteils aufweist, das als einstückiges Objektiv 10g der Vorrichtung ausgebildet ist.

Das einstückige Objektiv 10g weist ein erstes Segment 6, dem ein erstes Strahlenbündel 4 zur Beleuchtung eines nicht dargestellten Objekts zugeordnet ist, mit einer leicht mattierten optischen Fläche 24 und ein zweites Segment 7 für ein zweites Strahlenbündel 5 zur optischen Aufnahme des Objekts auf. Über die beidseits polierten Linsenflächen des zweiten Segments 7 wird das aufzunehmende Objekt auf dem Detektor 25 abgebildet. An der objektseitigen, leicht mattierten optischen Fläche 24 des ersten Segments 6 wird das erste Strahlenbündel 4 brechend gestreut, wodurch das Objekt mit einem diffusen Licht von gleichmässiger Helligkeit beleuchtet wird.

Zwischen dem ersten und dem zweitem Segment 6 bzw. 7 ist eine zylindrische Einsenkung 8e in das einstückige Objektiv 10g eingebracht. Dadurch kann optisches Übersprechen an der optischen Fläche 11 brechend gestreuter und an der mattierten Fläche 24 reflektierend gestreuter Strahlen 9 des ersten Strahlenbündels 4 mit dem zweiten Strahlenbündel 5 auf dem bildgebenden Detektor 25 im grossem Umfang reduziert werden. Die Einsenkung und die Oberflächenstruktur der mattierten optischen Fläche 24 kann mit demselben Werkzeug eingebracht werden. Eine Vorrichtung mit integrierter koaxialer Beleuchtung und sehr kleiner Bauform ist auf diese Weise einfach herstellbar.

Figur 10 zeigt ein achtes Ausführungsbeispiel des erfindungsgemässen Bauteils für eine Vorrichtung im Längsschnitt, das als Strahlteilerwürfel 10h für zwei Strahlenbündel 4 und 5 ausgebildet ist. Er setzt sich aus zwei miteinander verkitteten, planoptischen Prismen mit einer wellenlängenselektiven nur für das zweite Strahlenbündel 5 reflektierenden Schicht 26 zusammen.

Der Strahlteilerwürfel 10h weist ein zylindrisches erstes Segment 6 für ein zylindrisches erstes Strahlenbündel 4 und ein abgewinkeltes zweites Segment 7 für das zweite Strahlenbündel 5 auf. Das erste Segment 6 ist im Gegensatz zum zweiten Segment 7 ein Teil beider Prismen. In den Strahlteilerwürfel 10h ist koaxial zum ersten Segment 6 um dieses herum eine zylinderförmige Einsenkung 8e eingebracht, welche die wellenlängenselektive Schicht 26 durchstösst. Dadurch können an der hinteren optischen Fläche 11 brechend gestreute und an der wellenlängenselektiven Schicht 26 brechend oder reflektierend gestreute Strahlen des ersten Strahlenbündels 4 von der zylinderförmigen Einsenkung 8e absorbiert werden, die dann kein optisches Übersprechen mit dem zweiten Strahlenbündel 5 mehr verursachen können.

Figur 11 zeigt ein Ausführungsbeispiel eines erfindungsgemässen Bauteils im Längsschnitt, das als weiteres Objektiv 10i für eine Vorrichtung zum Senden und Empfangen eines ersten bzw. eines zweiten Strahlenbündels 4 bzw. 5 ausgebildet ist. Die optisch wirksame Achse des ersten Strahlenbündels 4, das von einer Punktlichtquelle erzeugt wird, und die optische Achse des Objektivs 10i sind koaxial zueinander ausgerichtet. Das Objektiv 10i weist im Gegensatz zu den vorherigen Ausführungsbeispielen zwei zueinander komplementäre halbkreisförmige Segmente 6 und 7 auf. Ein dem ersten Strahlenbündel 4 zugeordnetes erstes Segment 6 ist gegenüber einem dem zweiten Strahlenbündel 5 zugeordneten zweiten Segment 7 angeordnet. Dies ermöglicht beispielsweise einen halbkreisförmigen, grossen Bündelquerschnitt des ersten Strahlenbündels 4 beim Durchqueren des Objektivs 10i.

Praktisch alle an den optischen Flächen 11 des Objektivs 10i gestreuten und innerhalb desselben reflektierten Strahlen des ersten Strahlenbündels 4 lassen sich über eine geeignete, axiale Einsenkung 8g entlang der optischen Achse absorbieren und können so nicht mehr über das zweite Segment 7 optisches Übersprechen mit dem zweiten Strahlenbündel 5 verursachen. Die axiale Einsenkung 8g ist hier als Sacklochbohrung mit einem kleinen Durchmesser, von beispielsweise einem halben Millimeter, ausgebildet und erstreckt sich hier bis in die Nähe der objektseitigen optischen Fläche 11.

Figur 12 zeigt ein Ausführungsbeispiel eines erfindungsgemässen Bauteils zum Abbilden eines ersten Strahlenbündels im Längsschnitt, das hier als Objektivlinse 10j eines Fernglases ausgebildet ist. Ein vom Fernglas abzubildendes Sehstrahlenbündel bildet hier ein erstes Strahlenbündel 4. Sonnenstrahlen oder Strahlen anderer Fremdlichtquellen, die geneigt gegen das erste Strahlenbündel 4 in das Objektivlinse 10j eintreten, bilden hier das zweite Strahlenbündel 5.

Ein erster Teil des steil in die Objektivlinse 10j einfallenden zweiten Strahlenbündels 5 trifft auf einen Teilbereich der umlaufenden Randfläche 27 der Objektivlinse 10j. Ohne geeignete Massnahmen können an der umlaufenden Randfläche 27 gestreute Strahlen beispielsweise im Auge eines Benutzers des Fernglases - dem Empfänger des Abbildungssystems - optisches Übersprechen mit dem abzubildenden ersten Strahlenbündel 4 verursachen. Dieses optische Übersprechen macht sich in der Regel in einer wahrnehmbaren Minderung des Bildkontrastes bemerkbar.

Gemäss der Erfindung ist in die umlaufende Randfläche 27 wenigstens eine umlaufende Einsenkung 8h eingebracht. Von dieser werden einerseits am objektseitigen Teil der Randfläche 27 gestreut reflektierte Strahlen des zweiten Strahlenbündels 5 absorbiert, womit sie kein optisches Übersprechen mit dem ersten Strahlenbündel 4 mehr verursachen können. Andererseits werden von der umlaufenden Einsenkung 8h - vergleichbar einer Blende - Strahlen des zweiten Strahlenbündels 5 direkt eingefangen, womit diese nicht mehr auf den empfängerseitigen Teil der Randfläche 27 gelangen und über daran gestreute Strahlen optisches Übersprechen verursachen können. Über die in das Bauteil integrierte, zugleich als Lichtfalle und Blende wirkende, umlaufende Einsenkung 8h kann gestreutes Fremdlicht verringert und damit der Bildkontrast der Abbildung gesteigert werden. Der Bildkontrast erfährt in der Empfängerebene keine Degradation.

Die wenigstens eine umlaufende Einsenkung 8h kann über ein entsprechendes Ultraschall-schwingendes Läppwerkzeug oder mittels beispielsweise Diamantdrehen in das optische Bauteil eingebracht werden.

## Patentansprüche

1. Optisches Bauteil (10a, 10b, , 10d, , 10f) für eine Vorrichtung wie einen Distanzmesser, über welches Bauteil im Betrieb ein erstes Strahlenbündel (4) ausgesandt und wenigstens ein zweites Strahlenbündel (5) empfangen wird, welches Bauteil ein einstückiges Element (1, 2, 3) aus Glas, Quarz oder anderem anorganischen optischen Material mit einem das erste Strahlenbündel brechenden ersten Segment (6)und wenigstens einem das wenigstens eine zweite Strahlenbündel brechenden zweiten Segment (7) aufweist, wobei das erste Segment von dem wenigstens einen zweiten Segment im Wesentlichen umgeben ist,
**dadurch gekennzeichnet, dass** das Element als gemeinsames optisches Element für das erste und das wenigstens eine zweite Strahlenbündel vorgesehen ist und dass eine Einsenkung (8a, 8b, 8d, 8e) vorgesehen ist, die das erste Segment (6) im Wesentlichen umgibt und so ausgebildet ist, dass innerhalb der Vorrichtung optisches Übersprechen am Bauteil gestreuter Strahlen (9) des ersten Strahlenbündels (4) mit dem wenigstens einen zweiten Strahlenbündel (5) mittel- oder unmittelbar im Wesentlichen verhindert wird.

2. Optisches Bauteil (10c) für eine Vorrichtung wie einen Distanzmesser, über welches Bauteil im Betrieb ein erstes Strahlenbündel (4) ausgesandt und wenigstens ein zweites Strahlenbündel (5) empfangen wird, welches Bauteil ein einstückiges Element aus Glas, Quarz oder anderem anorganischen optischen Material mit einem das erste Strahlenbündel brechenden ersten Segment (6)und wenigstens einem das wenigstens eine zweite Strahlenbündel brechenden zweiten Segment (7) aufweist, wobei zwei zweite Segmente (7) beidseits des ersten Segments (6) angeordnet sind, **dadurch gekennzeichnet, dass** das Element als gemeinsames optisches Element für das erste und das wenigstens eine zweite Strahlenbündel vorgesehen ist und dass zwei kreisbogenförmige Einsenkungen (8c) zwischen dem ersten Segment und den zwei zweiten Segmenten vorgesehen und so ausgebildet sind, dass innerhalb der Vorrichtung optisches Übersprechen am Bauteil gestreuter Strahlen (9) des ersten Strahlenbündels (4) mit dem wenigstens einen zweiten Strahlenbündel (5) mittel- oder unmittelbar im Wesentlichen verhindert wird.

3. Optisches Bauteil (10i) für eine Vorrichtung wie einen Distanzmesser, über welches Bauteil im Betried ein erstes Strahlenbündel (4) ausgesandt und wenigstens ein zweites Strahlenbündel (5) empfangen wird, welches Bauteil ein einstückiges Element aus Glas, Quarz oder anderem anorganischen optischen Material mit einem das erste Strahlenbündel brechenden ersten Segment (6)und wenigstens einem das wenigstens eine zweite Strahlenbündel brechenden zweiten Segment (7) aufweist, wobei das erste Segment und das zweite Segment jeweils halbkreisförmig komplementär mit koaxialer optischer Achse ausgebildet sind,
**dadurch gekennzeichnet, dass** das Element als gemeinsames optisches Element für das erste und das wenigstens eine zweite Strahlenbündel vorgesehen ist und dass eine axiale Einsenkung (8g) vorgesehen ist, die zwischen erstem und zweiten Segment beispielsweise in Form eines Sacklochs vorgesehen und so ausgebildet ist, dass innerhalb der Vorrichtung optisches Übersprechen am Bauteil gestreuter Strahlen (9) des ersten Strahlenbündels (4) mit dem wenigstens einen zweiten Strahlenbündel (5) mittel- oder unmittelbar im Wesentlichen verhindert wird.

4. Optisches Bauteil nach Anspruch 1 oder 2, **dadurch gekennzeichnet, dass** die Einsenkung derart ausgebildet ist, dass das erste Segment mit Ausnahme wenigstens einer Materialbrücke im einstückigen Element vom wenigstens einen zweiten Segment optisch getrennt ist, und das erste Segment über die wenigstens eine Materialbrücke lagestabil zum wenigstens einen zweiten Segment gehalten wird.

5. Optisches Bauteil nach einem der vorhergehenden Ansprüche, **dadurch gekennzeichnet, dass** die Einsenkung (8a, ..., 8e, 8g) spaltförmig ausgebildet ist und sich die Tiefenausdehnung des Spalts der Einsenkung im Wesentlichen parallel zur betriebsgemäßen Ausbreitungsrichtung des ersten Strahlenbündels (4) erstreckt.

6. Optisches Bauteil nach Anspruch 5, **dadurch gekennzeichnet, dass** die Einsenkung nicht durch das Bauteil hindurch geht und im Bereich der Einsenkung das Bauteil eine verbleibende Materialstärke kleiner als ein Viertel, gegebenenfalls kleiner als ein Zehntel, der Tiefe des Spalts aufweist.

7. Optisches Bauteil nach Anspruch 5 oder 6, **dadurch gekennzeichnet, dass** die Tiefe des Spalts zumindest den dreifachen, vorzugsweise zumindest den zehnfachen, gegebenenfalls den zwanzigfachen, Wert der Breite des Spalts aufweist, wobei insbesondere die Breite des Spalts einen Wert aufweist, der kleiner als eineinhalb Millimeter, vorzugsweise kleiner als ein Millimeter, gegebenenfalls kleiner als die Hälfte eines Millimeters, ist.

8. Optisches Bauteil nach einem der Ansprüche 1 oder 4 bis 7, **dadurch gekennzeichnet, dass** eine einzige zusammenhängende, gegebenenfalls unterschiedlich gekrümmte, Einsenkung vorgesehen ist, die als das erste Segment (6) durchgehend umgreifend ausgebildet ist.

9. Optisches Bauteil nach Anspruch 1 oder 2, **dadurch gekennzeichnet, dass** mehrere, gegebenenfalls unterschiedlich geformte, Einsenkungen (8b, 8b', 8c) vorgesehen sind.

10. Optisches Bauteil nach einem der vorhergehenden Ansprüche, **dadurch gekennzeichnet, dass** die Oberfläche der Einsenkung mit Lack, Farbstoff oder Tinte versehen oder metallisch oder dielektrisch verspiegelt ist.

11. Optisches Bauteil nach einem der vorhergehenden Ansprüche, **dadurch gekennzeichnet, dass** zum mittelbaren Verhindern optischen Übersprechens ein Festkörper (19) oder ein strahlenundurchlässiger Füllstoff, beispielsweise Teer oder Klebstoff, in die Einsenkung eingebracht ist.

12. Optisches Bauteil nach einem der vorhergehenden Ansprüche als Objektiv für einen Distanzmesser, mit einem zum Sendebündel koaxialen Empfangsbündel, **dadurch gekennzeichnet, dass** das Sendebündel das erste Strahlenbündel (4) und das Empfangsbündel das wenigstens eine zweite Strahlenbündel (5) bilden.

13. Vermessungsinstrument mit einem Distanzmesser mit einem optischen Bauteil nach Anspruch 12, mit einem Zielfernrohr und gegebenenfalls mit einer Vorrichtung zur automatischen Zielerfassung mit einem Beleuchtungsbündel und einem Zielerfassungsbündel, **dadurch gekennzeichnet, dass**
- das optische Bauteil als Objektiv für das Zielfernrohr vorgesehen ist, und dass
- gegebenenfalls das Beleuchtungsbündel und das Zielerfassungsbündel ein weiteres erstes Strahlenbündel bzw. ein weiteres zweites Strahlenbündel bilden.

14. Verfahren zur Herstellung eines optischen Bauteils nach einem der Ansprüche 1 bis 12, mit einem einstückigen Element aus Glas, Quarz oder anderem anorganischen optischen Material, das polierte, gegebenenfalls beschichtete optische Flächen (11) aufweist,
**dadurch gekennzeichnet, dass**
über ein im Ultraschallbereich schwingendes, formübertragendes Läppwerkzeug wenigstens eine Einsenkung zum Absorbieren am Bauteil gestreuter Strahlen eines der Strahlenbündel ins Bauteil eingebracht wird.

15. Verfahren zur Herstellung eines optischen Bauteils nach einem der Ansprüche 1 bis 12, für wenigstens zwei Strahlenbündel (4, 5) mit einem einstückigen Element aus Glas, Quarz oder anderem anorganischen optischen Material, das polierte, gegebenenfalls beschichtete optische Flächen (11) aufweist,
**dadurch gekennzeichnet, dass**
über ein Laserstrahlenbündel, das wenigstens teilweise vom Bauteil absorbiert wird, wenigstens eine Einsenkung in das Bauteil eingebracht wird.

16. Verfahren nach Anspruch 14 oder 15, **dadurch gekennzeichnet, dass** die Einsenkung durch eine der optischen Flächen (11) hindurch in das Bauteil eingebracht wird.

17. Verfahren nach einem der Ansprüche 14 bis 16, **dadurch gekennzeichnet, dass** das einstückige Element als rundoptisches Element ausgebildet ist.

18. Verfahren nach einem der Ansprüche 14 bis 17, **dadurch gekennzeichnet, dass** nach dem Einbringen der Einsenkung (8b) ein weiteres optisches Element (15') an einer optischen Fläche (11) befestigt wird.

## Claims

1. Optical component (10a, 10b, 10d, 10f) for a device such as a distance meter, via which component during operation a first beam (4) is emitted and at least one second beam (5) is received, which component has a unipartite element (1, 2, 3) made from glass, quartz or another inorganic optical material, comprising a first segment (6), which refracts the first beam, and at least one second segment (7), which refracts the at least one second beam, the first segment being substantially surrounded by the at least one second segment, **characterized in that** the element is provided as a common optical element for the first and the at least one second beam, and **in that** a depression (8a, 8b, 8d, 8e) is provided which substantially surrounds the first segment (6) and is designed so that inside the device optical crosstalk between rays (9) of the first beam (4) that are scattered on the component and the at least one second beam (5) is indirectly or directly substantially prevented.

2. Optical component (10c) for a device such as a distance meter, via which component during operation a first beam (4) is emitted and at least one second beam (5) is received, which component has a unipartite element (1, 2, 3) made from glass, quartz or another inorganic optical material, comprising a first segment (6), which refracts the first beam, and at least one second segment (7), which refracts the at least one second beam, two second segments (7) being arranged on either side of the first segment (6), **characterized in that** the element is provided as a common optical element for the first and the at least one second beam, and **in that** two circularly arcuate depressions (8c) are provided between the first segment and the two second segments and designed so that inside the device optical crosstalk between rays (9) of the first beam (4) that are scattered on the component and the at least one second beam (5) is indirectly or directly substantially prevented.

3. Optical component (10i) for a device such as a distance meter, via which component during operation a first beam (4) is emitted and at least one second beam (5) is received, which component has a unipartite element (1, 2, 3) made from glass, quartz or another inorganic optical material, comprising a first segment (6), which refracts the first beam, and at least one second segment (7), which refracts the at least one second beam, the first segment and the second segment respectively being designed in a semi-circular and complementary fashion with a coaxial optical axis, **characterized in that** the element is provided as a common optical element for the first and the at least one second beam, and **in that** an axial depression (8g) is provided, for example in the form of a blind hole, between first and second segment and designed so that inside the device optical crosstalk between rays (9) of the first beam (4) that are scattered on the component and the at least one second beam (5) is indirectly or directly substantially prevented.

4. Optical component according to Claim 1 or 2, **characterized in that** the depression is designed in such a way that, with the exception of at least one material bridge in the unipartite element, the first segment is optically separated from the at least one second segment, and the first segment is held via the at least one material bridge in stable position relative to at least one second segment.

5. Optical component according to one of the preceding claims, **characterized in that** the depression (8a, ..., 8e, 8g) is designed in the form of a slit, and the extent of the depth of the slit in the depression runs substantially parallel to the direction of propagation of the first beam (4) during operation.

6. Optical component according to Claim 5, **characterized in that** the depression does not go through the component, and in the region of the depression the component has a residual material thickness smaller than a quarter, if appropriate smaller than a tenth, of the depth of the slit.

7. Optical component according to Claim 5 or 6, **characterized in that** the depth of the slit is at least three times, preferably at least 10 times, if appropriate 20 times the value of the width of the slit, in particular the width of the slit having a value which is smaller than one and half millimetres, preferably smaller than a millimetre, if appropriate smaller than half a millimetre.

8. Optical component according to one of Claims 1 or 4 to 7, **characterized in that** a single coherent, if appropriate differently curved, depression is provided, which is designed in a fashion completely embracing the first segment (6).

9. Optical component according to Claim 1 or 2, **characterized in that** a plurality of depressions (8b, 8b', 8c), if appropriate differently shaped, are provided.

10. Optical component according to one of the preceding claims, **characterized in that** the surface of the depression is provided with a coating, dye or ink, or metallically or dielectrically mirrored.

11. Optical component according to one of the preceding claims, **characterized in that** in order to indirectly prevent optical crosstalk, a solid body (19) or a filler opaque to radiation, for example tar or adhesive, is introduced into the depression.

12. Optical component according to one of the preceding claims as an objective for a distance meter, having a receiving beam coaxial with the transmitting beam, **characterized in that** the transmitting beam forms the first beam (4), and the receiving beam forms the at least one second beam (5).

13. Surveying instrument with a distance meter having an optical component according to Claim 12, comprising a sighting telescope and, if appropriate, comprising a device for automatic target acquisition with an illuminating beam and a target acquisition beam, **characterized in that**
- the optical component is provided as an objective for the sighting telescope, and **in that**
- if appropriate, the illuminating beam and the target acquisition beam form a further first beam and a further second beam, respectively.

14. Method for producing an optical component according to one of Claims 1 to 12, comprising a unipartite element made from glass, quartz or another inorganic optical material and which has polished, if appropriate coated optical surfaces (11), **characterized in that** at least one depression for absorbing rays, scattered on the component, of one of the beams is introduced into the component via a shaping lapping tool oscillating in the ultrasound range.

15. Method for producing an optical component according to one of Claims 1 to 12 for at least two beams (4, 5) comprising a unipartite element made from glass, quartz or another inorganic optical material and which has polished, if appropriate coated optical surfaces (11), **characterized in that** at least one depression is introduced into the component via a laser beam which is absorbed at least partially by the component.

16. Method according to Claim 14 or 15, **characterized in that** the depression is introduced into the component through one of the optical surfaces (11).

17. Method according to one of Claims 14 to 16, **characterized in that** the unipartite element is designed as a round optical element.

18. Method according to one of Claims 14 to 17, **characterized in that** a further optical element (15') is fastened on an optical surface (11) after the introduction of the depression (8b).

## Revendications

1. Composant optique (10a, 10b, 10d, 10f) pour un dispositif tel qu'un télémètre, composant par l'intermédiaire duquel, en fonctionnement, un premier faisceau de rayons (4) est émis et au moins un deuxième faisceau de rayons (5) est reçu, ledit composant présentant un élément (1, 2, 3) réalisé d'une seule pièce, en verre, quartz ou un autre matériau optique non organique, avec un premier segment (6), produisant un effet de réfraction sur le premier faisceau de rayons, et au moins un deuxième segment (7), produisant un effet de réfraction sur le au moins un deuxième faisceau de rayons, le premier segment étant pratiquement entouré par le au moins deuxième segment,
**caractérisé en ce que** l'élément est prévu sous forme d'élément optique commun pour le premier et le au moins un deuxième faisceau de rayons, et **en ce qu'**est prévu un creusement (8a, 8b, 8d, 8e), entourant pratiquement le premier segment (6) et réalisé de manière qu'à l'intérieur du dispositif soit pratiquement empêchée, indirectement ou directement, toute diaphonie optique de rayons (9), dispersés sur le composant, du premier faisceau de rayons (4) avec le au moins un deuxième faisceau de rayons (5).

2. Composant optique (10c) pour un dispositif tel qu'un télémètre, composant par l'intermédiaire duquel, en fonctionnement, un premier faisceau de rayons (4) est émis et au moins un deuxième faisceau de rayons (5) est reçu, ledit composant présentant un élément réalisé d'une seule pièce, en verre, quartz ou un autre matériau optique non organique, avec un premier segment (6), produisant un effet de réfraction sur le premier faisceau de rayons, et au moins un deuxième segment (7), produisant un effet de réfraction sur le au moins un deuxième faisceau de rayons, deux deuxièmes segments (7) étant disposés de part et d'autre du premier segment,
**caractérisé en ce que** l'élément est prévu sous forme d'élément optique commun pour le premier et le au moins un deuxième faisceau de rayons, et **en ce que** deux creusements (8c), en forme d'arc de cercle, sont prévus entre le premier segment et les deux deuxièmes segments et réalisés de manière qu'à l'intérieur du dispositif soit pratiquement empêchée, indirectement ou directement, toute diaphonie optique de rayons (9), dispersés sur le composant, du premier faisceau de rayons (4) avec le au moins un deuxième faisceau de rayons (5).

3. Composant optique (10i) pour un dispositif tel qu'un télémètre, composant par l'intermédiaire duquel, en fonctionnement, un premier faisceau de rayons (4) est émis et au moins un deuxième faisceau de rayons (5) est reçu, ledit composant présentant un élément réalisé d'une seule pièce, en verre, quartz ou un autre matériau optique non organique, avec un premier segment (6), produisant un effet de réfraction sur le premier faisceau de rayons, et au moins un deuxième segment (7), produisant un effet de réfraction sur le au moins un deuxième faisceau de rayons, le premier segment et le deuxième segment étant chacun réalisés en forme de demi cercle, complémentaire, avec un axe optique coaxial,
**caractérisé en ce que** l'élément est prévu sous forme d'élément optique commun pour le premier et le au moins un deuxième faisceau de rayons, et **en ce qu'**est prévu un creusement (8g) axial, prévu entre le premier et le deuxième segment, par exemple sous la forme d'un trou borgne et réalisé de manière qu'à l'intérieur du dispositif soit pratiquement empêchée, indirectement ou directement, toute diaphonie optique de rayons (9), dispersés sur le composant, du premier faisceau de rayons (4) avec le au moins un deuxième faisceau de rayons (5).

4. Composant optique selon la revendication 1 ou 2, **caractérisé en ce que** le creusement est réalisé de manière que le premier segment, à l'exception d'au moins un pont de matériau, soit optiquement séparé du au moins un deuxième segment dans l'élément réalisé d'une seule pièce, et le premier segment est maintenu de manière stable quant à la position par rapport au au moins un deuxième segment par l'intermédiaire du au moins un pont de matériau.

5. Composant optique selon l'une des revendications précédentes, **caractérisé en ce que** le creusement (8a, ..., 8^{e}, 8g) est conformé en interstice, et l'étendue en profondeur de l'interstice du creusement s'étend sensiblement parallèlement à la direction de propagation fonctionnellement nominale du premier faisceau de rayons (4).

6. Composant optique selon la revendication 5, **caractérisé en ce que** le creusement ne traverse pas le composant et, dans la zone du creusement, le composant présente une épaisseur de matériau subsistante inférieure à un quart, le cas échéant inférieure à un dixième de la profondeur de l'interstice.

7. Composant optique selon la revendication 5 ou 6, **caractérisé en ce que** la profondeur de l'interstice présente au moins le triple de, de préférence au moins le décuple de, le cas échéant vingt fois la valeur de la largeur de l'interstice, où en particulier la largeur de l'interstice présente une valeur inférieure à un millimètre et demi, de préférence inférieure à un millimètre, le cas échéant inférieure à un demi millimètre.

8. Composant optique selon l'une des revendications 1 ou 4 à 7, **caractérisé en ce qu'**est prévu un creusement cohérent unique, le cas échéant d'une courbure différente, réalisé en entourant de manière continue le premier segment (6).

9. Composant optique selon la revendication 1 ou 2, **caractérisé en ce que** plusieurs creusements (8b, 8b', 8c), le cas échéant de formes différentes, sont prévus.

10. Composant optique selon l'une des revendications précédentes, **caractérisé en ce que** la surface du creusement est garnie d'un vernis, d'un colorant ou d'une encre, ou optiquement argentée de manière métallique ou diélectrique.

11. Composant optique selon l'une des revendications précédentes, **caractérisé en ce que**, pour indirectement empêcher toute diaphonie optique, un corps solide (19), ou une charge opaque aux rayons, par exemple du goudron ou un adhésif, est introduit(e) dans le creusement.

12. Composant optique selon l'une des revendications précédentes, en tant qu'objectif pour un télémètre, avec un faisceau de réception coaxial au faisceau d'émission, **caractérisé en ce que** le faisceau d'émission forme le premier faisceau de rayons (4) et le faisceau de réception forme le au moins un deuxième faisceau de rayons (5).

13. Instrument d'arpentage avec un télémètre muni d'un composant optique selon la revendication 12, avec une lunette de visée et, le cas échéant, avec un dispositif de détection automatique de cible, avec un faisceau d'éclairage et un faisceau de détection de cible, **caractérisé en ce que**
- le composant optique est prévu sous forme d'objectif pour la lunette de visée, et **en ce que**,
- le cas échéant, le faisceau d'éclairage et le faisceau de détection de cible forment un autre premier faisceau de rayons, respectivement un autre deuxième faisceau de rayons.

14. Procédé de fabrication d'un composant optique selon l'une des revendications 1 à 12, avec un élément réalisé d'une seule pièce, en verre, quartz ou un autre matériau optique non organique, présentant des surfaces optiques (11) polies, le cas échéant munies de revêtement,
**caractérisé en ce que**,
par l'intermédiaire d'un outil de pierrage, transmettant une forme, vibrant dans la plage des ultra-sons, au moins un creusement est ménagé dans le composant, pour absorption des rayons, dispersés sur le composant, d'un des faisceaux de rayons.

15. Procédé de fabrication d'un composant optique selon l'une des revendications 1 à 12, pour au moins deux faisceaux de rayons (4, 5), avec un élément réalisé d'une seule pièce, en verre, quartz ou un autre matériau optique non organique, présentant des surfaces optiques (11) polies, le cas échéant munies de revêtement,
**caractérisé en ce qu'**
au moins un creusement est ménagé dans le composant, par l'intermédiaire d'un faisceau de rayons laser, absorbé au moins en partie par le composant.

16. Procédé selon la revendication 14 ou 15, **caractérisé en ce que** le creusement est ménagé dans le composant, à travers l'une des surfaces optiques (11).

17. Procédé selon l'une des revendications 14 à 16, **caractérisé en ce que** l'élément réalisé d'une seule pièce est réalisé sous forme d'élément optique rond.

18. Procédé selon l'une des revendications 14 à 17, **caractérisé en ce que**, après avoir ménagé le creusement (8b), un autre élément optique (15') est fixé sur une surface optique (11).
